Europäisches Patentamt

European Patent Office

Office européen des brevets

(19)

(11) **EP 0 876 640 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(21) Anmeldenummer: **96946057.5**

(22) Anmeldetag: **09.12.1996**

(51) Int Cl.$^7$: **G05B 19/19**

(86) Internationale Anmeldenummer:
**PCT/DE96/02358**

(87) Internationale Veröffentlichungsnummer:
**WO 97/27521 (31.07.1997 Gazette 1997/33)**

(54) **BESTIMMUNG UND OPTIMIERUNG DER ARBEITSGENAUIGKEIT EINER WERKZEUGMASCHINE ODER EINES ROBOTERS ODER DERGLEICHEN**

DETERMINATION AND OPTIMIZATION OF THE OPERATING ACCURACY OF A MACHINE TOOL, ROBOT OR THE LIKE

DETERMINATION ET OPTIMISATION DE LA PRECISION D'UNE MACHINE-OUTIL, D'UN ROBOT OU SIMILAIRE

(84) Benannte Vertragsstaaten:
**AT CH DE ES FR GB IT LI SE**

(30) Priorität: **24.01.1996 DE 19602470**

(43) Veröffentlichungstag der Anmeldung:
**11.11.1998 Patentblatt 1998/46**

(73) Patentinhaber: **SIEMENS AKTIENGESELLSCHAFT**
**80333 München (DE)**

(72) Erfinder:
• **HÖCHERL, Günther**
 **D-91074 Herzogenaurach (DE)**
• **MOSER, Roland**
 **D-92318 Neumarkt (DE)**
• **TRÖNDLE, Hans-Peter**
 **D-91301 Forchheim (DE)**
• **WIEGÄRNTER, Georg**
 **D-91278 Pottenstein (DE)**

(56) Entgegenhaltungen:
EP-A- 0 165 436 EP-A- 0 383 328
EP-A- 0 510 204 WO-A-91/20021
WO-A-94/07187 US-A- 5 305 241

EP 0 876 640 B1

**Beschreibung**

Die Erfindung betrifft die Verwendung bekannter Elemente einer Werkzeugmaschine oder eines Roboters oder dergleichen zur Bestimmung und Optimierung von deren Arbeitsgenauigkeit.

Bei der Entwicklung und auch bei der Inbetriebnahme von Werkzeugmaschinen oder Robotern stellt sich unabhängig von der zugrundeliegenden Steuerungsaufgabe für einen Entwicklungs- bzw. Inbetriebnahmeingenieur in der Regel das Problem, höhere Reglerstrukturen bzw. Vorsteuerungen richtig einstellen zu müssen und ihre Wirkungen auf einfache Art und Weise zu erkennen. Dazu sind in der Regel Meßsysteme als Hilfsmittel notwendig, welche aufgrund der erforderlichen Genauigkeit einen erheblichen zusätzlichen Kostenaufwand für die Entwicklung und die Inbetriebnahme mit sich bringen. Für die Bestimmung der Arbeitsgenauigkeit einer Werkzeugmaschine beispielsweise werden mehrere teuere Meßgeräte eingesetzt, deren Anschaffung häufig mehr als 150 000 DM kostet. Hinzu kommt, daß solche Meßgeräte ein speziell dafür ausgebildetes Personal erfordern.

Für eine Gleichlaufmessung beispielsweise sind teuere Beschleunigungsaufnehmer, ein Ladungsverstärker sowie Analysegeräte zur Spektralanalyse notwendig. So lassen sich beispielsweise induktive Wegtaster verwenden, jedoch nur solche, mit einem Lineal mit höchster Oberflächenqualität, was entsprechend hohe Kosten nach sich zieht. Neben den Kosten ergeben sich bei einer Verwendung solcher Hilfsmittel zur Bestimmung des Gleichlaufs Probleme bei Achsüberlagerungen. Auch können Spindeleinflüsse schlecht damit ermittelt werden.

Um die Positioniertreue zu ermitteln, werden herkömmlicherweise induktive Wegtaster verwendet. Diese sind jedoch sehr langsam. Bei optischen Gebern besteht das Problem, daß die Stelle, an der die Lage gemessen wird - in der Regel ein Glasmaßstab -, schwer zugänglich ist.

Um die Konturtreue oder andere Konturzüge, beispielsweise eine Ecke, zu vermessen, ist herkömmlicherweise eine sehr zeitaufwendige Werkstückvermessung notwendig. Dazu ist ebenfalls wiederum ein Einsatz teuerer Meßinstrumente notwendig.

Zur Durchführung eines Kreisformtestes wird herkömmlicherweise ein Kreisnormal mit zweidimmensionalem Tastkopf benötigt, welcher ein aufwendiges Justieren im Hinblick auf den Kreismittelpunkt erfordert. Hinzu kommt, daß für jeden Kreisradius ein eigenes solches Kreisnormal notwendig ist. Die dadurch verursachten Kosten sind erheblich und belaufen sich, abhängig von der Genauigkeit, auf über 100 000 DM.

Ebenso kann durch eine Ausschnittsvergrößerung der Sollbahn und Istbahn die Konturgenauigkeit ermittelt werden, wobei hier der gesamte Bahnverlauf nicht mehr eingesehen werden kann, da Vergrößerungsfaktoren im Bereich von 100 bis 1000 notwendig sind.

Aus der europäischen Patentanmeldung 0 165 436 ist ein Verfahren zur speicherplatzsparenden Programmierung von Roboterbewegungen bekannt. Zur Bestimmung und Optimierung des Gleichlaufes werden durch eine Spektralanalyse der Wegabweichungswerte, insbesondere durch eine Fourieranalyse, die Ursachen für Ungenauigkeiten ermittelt. Neben einer speicherplatzsparenden Progammierung wird so auch die Dynamik des verwendeten Roboters durch eine Übertragungsfunktion darstellbar und eine Geschwindigkeitsunabhängige Kompensation der Roboterdynamik im Spektralbereich ermöglicht.

Aus der internationalen Anmeldung WO-A-94/07187 ist ein Verfahren zur Überprüfung der Arbeitsgenauigkeit einer NC-Maschine bekannt. Durch Vergleich einer kreisförmigen Sollbahn mit einer die tatsächliche Maschinenbewegung beschreibenden Istkreisbahn gemäß einem die Sollbewegungsbahn beschreibenden Lageführungssignal wird die Arbeitsgenauigkeit der NC-Maschine überprüft. Dies ist jedoch nur für eine wenigstens zweiachsige NC-Maschine möglich. Auch ist das Verfahren auf eine kreisförmige Sollbahn beschränkt.

Aus der europäischen Patentanmeldung 0 510 204 ist ein Verfahren zur Bestimmung der Arbeitsgenauigkeit einer numerisch gesteuerten Maschine bekannt. Es werden periodisch Positionen in X- und Y-Richtung erfaßt, welche als Antwort auf entsprechende Stellsignale für die jeweiligen Achsen der Maschine auftreten. Die Sollbahn wird der tatsächlichen Istbahn gegenübergestellt und überprüft, ob Abweichungen im Rahmen eines erlaubten Bereiches liegen oder aber diesen überschreiten.

Die Aufgabe der Erfindung besteht somit darin, Möglichkeiten zur Bestimmung sowie darüber hinaus zur Optimierung der Arbeitsgenauigkeit von Werkzeugmaschinen oder Robotern oder anderen numerisch gesteuerten Maschinen zu finden, welche keinen zusätzlichen Kostenaufwand für teuere Meßsysteme erfordern, die eine Genauigkeitsangabe für den Endkunden ohne Vermessung der Werkstücke ermöglichen und darüber hinaus auch eine frühzeitige Fehlererkennung sowie Fehlerlokalisierung ermöglichen.

Gemäß der Erfindung wird diese Aufgabe durch die Verwendung vorhandener Lagemeßsysteme einer Werkzeugmaschine oder eines Roboters oder dergleichen zur Bestimmung und Optimierung von deren Arbeitsgenauigkeit gelöst, wobei in einer numerischen Steuerung durch eine Lagemessung Weginformationen beliebig vieler Achsen über ein vorgebbares Meßintervall abgetastet und gespeichert werden, die so gewonnenen Daten derart umgeformt und aufbereitet werden, daß Rückschlüsse auf die tatsächliche Arbeitsgenauigkeit und auf Ursachen für Ungenauigkeiten möglich sind, und auf die Ursachen einwirkende Kompensationsparameter so bemessen werden, daß sie den Ursachen für Ungenauigkeiten entgegenwirken, indem die die Weginformationen repräsentierenden Daten nach folgenden weiteren Verfahrensschritten umgeformt und aufbereitet werden:

- aus den die Weginformationen repräsentierenden Daten wird entsprechend der zugrundeliegenden Kontur eine tatsächlich beschriebene Istbahn der vorgesehenen Achsen ermittelt und mit dem Verlauf einer zugehörigen Sollbahn verglichen,
- zwischen der Istbahn und der Sollbahn wird ein geometrischer Bezug hergestellt, indem ein Sollwertvektor ermittelt wird, welcher denselben Winkel aufweist wie der aktuelle Istwertvektor,
- eine Konturabweichung in einem beliebigen Bahnpunkt wird als der Abstand zwischen dem Istwertvektor und dem Sollwertvektor in dem genannten Bahnpunkt ermittelt,
- Konturabweichungen von der Sollbahn werden durch eine entsprechende Justierung von Kompensationsparametern wie Haftreibungskompensation und/oder Momentvorsteuerung und/oder Drehzahlvorsteuerung minimiert.

Damit kann vorteilhafterweise jede beliebige Sollbahn optimiert werden. Es kann eine Konturabweichung ermittelt werden, welche als direktes Maß für die Arbeitsgenauigkeit der Maschine an jeder beliebigen Kontur herangezogen werden kann. Damit ist auch eine Bestimmung der Bahngenauigkeit an beispielsweise Werkzeugmaschinen bei solchen Bearbeitungsarten ermöglicht, bei denen insbesondere der sogenannte Kreisformtest nur wenig aussagekräftig ist (z.B. Umrunddrehen, Nockenwellenschleifen oder in Formenbau), da hier aus Achssicht keine kreisähnliche Bahn gefahren wird bzw. das Augenmerk auf wesentlich kompliziertere Geometrieverläufe gelegt wird. Somit wird eine Überprüfung der Arbeitsgenauigkeit an numerisch gesteuerten Werkzeugmaschinen an jeder beliebigen Kontur ermöglicht.

In einer ersten vorteilhaften Ausgestaltung gemäß der vorliegenden Erfindung wird eine tatsächliche Istbahn auf besonders effektive Art und Weise aus den die Weginformationen repräsentierenden Daten ermittelt, indem die Weginformationen repräsentierenden Daten als Schleppabstandswerte gemessen werden und die tatsächlich beschriebene Istbahn der vorgesehenen Achsen anhand dieser Schleppabstandswerte und den Sollbahnwerten ermittelt wird.

In einer weiteren vorteilhaften Ausgestaltung gemäß der vorliegenden Erfindung werden die im vorangehenden erreichbaren Vorteile auch bei solchen Werkzeugmaschinen, Robotern oder dergleichen erreicht, welche sowohl Linearachsen als auch mindestens eine Rundachse aufweisen. Dies geschieht, indem die zur Rundachse zugehörigen, in Polarkoordinaten vorliegenden Sollbahnwerte und Istbahnwerte in das kartesische Koordinatensystem umgewandelt werden, indem die Radiusinformation aus den Werten der Linearachse und die Winkelinformation aus den Werten der Rundachse gewonnen werden.

In einer weiteren vorteilhaften Ausgestaltung gemäß der vorliegenden Erfindung wird eine Konturabweichung mit maximal möglicher Genauigkeit anhand der in einer numerisch gesteuerten Werkzeugmaschine, einem Roboter oder dergleichen vorliegenden diskreten Werten ermittelt. Dies wird erreicht, indem als Konturabweichung die echte Konturabweichung im Winkel von 90° zur Sollbahn anhand des Istbahnpunktes und den beiden jeweils dem Istbahnpunkt mit geringstem Abstand vorangehenden und mit geringstem Abstand folgenden Sollbahnpunkten ermittelt wird.

In einer weiteren vorteilhaften Ausgestaltung gemäß der vorliegenden Erfindung wird darüber hinaus erreicht, daß Meßergebnisse, die die tatsächliche Arbeitsgenauigkeit darstellen, veranschaulicht werden können, ohne daß dafür separate Visualisierungsmittel benötigt werden. Bei der Entwicklung bzw. Instandsetzung oder aber auch einer Analyse zum frühzeitigen Erkennen von Fehlern lassen sich so eventuelle Ungenauigkeiten vom Entwicklungs- bzw. Inbetriebnahmeingenieur zur Erforschung der Ursachen ohne zusätzlichen Aufwand analysieren. Dies erfolgt dadurch, daß eine Anzeige der Meßergebnisse bzw. Daten direkt am Bildschirm einer vorhandenen numerischen Steuerung erfolgt.

In einer weiteren vorteilhaften Ausgestaltung gemäß der Erfindung wird erreicht, daß nicht nur die numerisch gesteuerte Werkzeugmaschine, der Roboter etc. selbst, sondern auch ein auf diesen Maschinen vorliegendes Teileprogramm optimiert werden kann. Dies geschieht dadurch, daß durch eine Justierung von Teileprogrammparametern entsprechend einer vorab ermittelten Konturabweichung dieses Teilprogrammes so vorgenommen wird, daß eine maximal zulässige Konturabweichung in jedem Punkt der zu beschreibenden Kontur gewährleistet wird.

In einer vorteilhaften Ausgestaltung der vorliegenden Erfindung wird erreicht, daß unter Verwendung von einem Lagemeßsystem einer Werkzeugmaschine oder eines Roboters oder dergleichen speziell der Gleichlauf bestimmt und optimiert werden kann, wobei dazu ebenfalls keine teuren Meßsysteme eingesetzt werden müssen. Dies geschieht, indem die die Weginformation repräsentierenden Daten nach folgenden weiteren Verfahrensschritten umgeformt und aufbereitet werden:

- für jede Achse wird die Steigung der Wegänderung über die Zeit ermittelt,
- für jede Achse wird anschließend mit Hilfe einer Fehlerquadratminimierung eine eventuelle Wegabweichung über die Zeit ermittelt,
- über eine Spektralanalyse der Wegabweichungswerte, insbesondere durch eine Fourieranalyse, werden die Ursachen ermittelt und getrennt.

In einer weiteren vorteilhaften Ausgestaltung der vorliegenden Erfindung wird die Verwendung vorhandener Lagermeßsysteme einer Werkzeugmaschine oder eines Roboters oder dergleichen zur Bestimmung und Optimierung der Positioniergenauigkeit weitergebildet. Dies geschieht ebenfalls ohne Einsatz teuerer externer Meßsysteme. Dazu werden die die Weginformationen repräsentierenden Daten nach den folgenden weiteren Verfahrensschritten umgeformt und aufbereitet:

- die ermittelten Lagewerte werden in ihrem zeitlichen Verlauf exakt da, wo eine Regelung eingreift, den Lagesollwerten gegenübergestellt,
- eine eventuelle Abweichung wird durch eine entsprechende Justierung von Kompensationsparametern wie Haftreibungskompensation und/oder Momentvorsteuerung und/oder Drehzahlvorsteuerung minimiert.

Weitere Vorteile sowie erfinderische Einzelheiten ergeben sich aus der nachfolgenden Beschreibung möglicher Ausführungsbeispiele, welche jeweils für einen anderen Parameter zur Bestimmung der Arbeitsgenauigkeit einer Werkzeugmaschine, eines Roboters oder dergleichen ausgestaltet sind.

Weitere Einzelheiten ergeben sich auch anhand der Figuren. Im einzelnen zeigen:

FIG 1 eine Darstellung eines Konturzuges in der Ebene zur Verdeutlichung der Problematik zwischen zeitlichem und geometrischen Bezug von Sollbahn und Istbahn,

FIG 2 die Bestimmung eines zu einem Istbahnpunkt zugehörigen Sollbahnpunktes in Abhängigkeit von der Wegdifferenz zwischen aktuellem Istwert und jeweiligem Sollwert und

FIG 3 ein Schema zur Ermittlung der exakten Konturabweichung aus drei Punkten in der Ebene.

Bei numerisch gesteuereten Werkzeugmaschinen, Robotern oder anderen numerisch gesteuerten Maschinen ist in der Regel ein Lagemeßsystem vorhanden. Dieses kann entweder als Absolut- oder als relatives bzw. inkrementelles Lagesystem ausgeprägt sein und beispielsweise auf optischer oder auf induktiver Basis arbeiten. In der numerischen Steuerung liegt somit eine Weginformation in der Regel bereits vor. Zur Bestimmung der Arbeitsgenauigkeit einer solchen numerisch gesteuerten Maschine werden erfindungsgemäß Weginformationen, wo notwendig auch solche mehrerer Achsen, über ein vorgebbares Meßintervall abgetastet und gespeichert. Die so erhaltenen Daten beinhalten implizit Informationen über die Arbeitsgenauigkeit sowie für eventuelle Ungenauigkeiten verantwortliche Ursachen. Aus diesem Grunde werden die abgetasteten und gespeicherten Weginformationen so umgeformt und aufbereitet, daß Rückschlüsse auf die tatsächliche Arbeitsgenauigkeit sowie auf die Ursachen für eventuelle Ungenauigkeiten möglich sind. Dazu können beliebige Verfahren zur Signalverarbeitung eingesetzt werden, welche sich im wesentlichen nach dem zu untersuchenden Parameter im Hinblick auf die Arbeitsgenauigkeit, z.B. des Gleichlaufs, der Positioniergenauigkeit oder auch der Konturtreue, richten. Aus den so erhaltenen Ergebnissen lassen sich Fehlerursachen bzw. Ursachen für Ungenauigkeiten ableiten und über eine Beeinflussung von diesen Ursachen entgegenwirkenden Kompensationsparametern läßt sich die Genauigkeit der Maschine sowohl während der Entwicklung als auch bei der Inbetriebnahme optimieren. Darüber hinaus lassen sich die erhaltenen Ergebnisse graphisch sowie numerisch darstellen, wodurch einem Entwicklungsingenieur bzw. einem Inbetriebnahmeingenieur die Möglichkeit gegeben wird, weitere Rückschlüsse auf mögliche Ursachen für Fehler bzw. Ungenauigkeiten zu ziehen. Zur graphischen Visualisierung dieser Ergebnisse läßt sich besonders vorteilhaft ein bereits vorhandener Bildschirm der numerischen Steuerung oder eines entsprechenden Programmiergerätes einsetzen.

Im folgenden werden nun vorteilhafte Methoden zur Umformung und Aufbereitung der abgetasteten und gespeicherten Weginformationen im Hinblick auf einzelne, die Genauigkeit beeinflussende Parameter wie Gleichlauf, Positioniergenauigkeit oder Konturtreue dargestellt.

Zur Bestimmung und Optimierung des Gleichlaufes unter Einbeziehung eines vorhandenen Lagemeßsystemes werden, wie bereits dargestellt, Weginformationen für jede Achse über ein vorgebbares Meßintervall abgetastet und gespeichert. Diese Daten werden so weiterverarbeitet, daß für jede Achse die Steigung der Wegänderung über die Zeit ermittelt wird. Diese kann ebenfalls über einen Bildschirm an der NC-Steuerung oder einem entsprechenden Programmiergerät graphisch visualisiert werden. Für jede Achse erfolgt anschließend eine Berechnung eventueller Wegabweichungen mit Hilfe beispielsweise einer Fehlerquadratminimierung. Eine solche Wegabweichung wird ebenfalls über die Zeit ermittelt. Mittels einer Spektralanalyse der so bestimmten Wegabweichungswerte werden dann eventuelle Ursachen ermittelt und getrennt. Eine beispielhafte Möglichkeit zur Durchführung einer solchen Spektralanalyse bietet eine Fourieranalyse, welche als sogenannte Fast-Fourier-Transformation besonders vorteilhaft auf einer numerischen Steuerung implementiert werden kann. Somit können mögliche Ursachen für Ungenauigkeiten, die beispielsweise in den verwendeten Antrieben, dem Umrichter oder aber in Elementen der Maschine selbst liegen können, getrennt und zugeordnet werden.

Um mit der erfindungsgemäßen Verwendung vorhandener Lagemeßsysteme die Positioniergenauigkeit zu bestimmen und zu optimieren, werden die anhand der abgetasteten gespeicherten Weginformationen ermittelten Lagewerte in ihrem zeitlichen Verlauf exakt an der Stelle, wo eine Regelung eingreift, den entsprechenden durch die numerische Steuerung produzierten Lagesollwerten gegenübergestellt und eventuelle Abweichungen werden durch eine entsprechende Justierung von Kompensationsparametern minimiert. Solche Kompensationsparameter können beispielsweise durch eine Kompensation des Stick-Slip-Verhaltens, welches die Haftreibung beschreibt, vorgenommen werden. Andere Möglichkeiten zur Kompensation bestehen in einem entsprechenden Einwirken auf eine Momentvorsteuerung oder eine Drehzahlvorsteuerung, welche ebenfalls im Rahmen einer numerischen Steuerung bereits vorhanden sein können.

Zur Bestimmung und Optimierung der Konturtreue unter Verwendung vorhandener Lagemeßsysteme werden die über das vorgebbare Meßintervall getasteten und gespeicherten Weginformationen, welche für jede einzelne Achse ermittelt wurden, entsprechend des darzustellenden Konturzuges über mehrere Achsen überlagert. Es kann jede beliebige Kontur dargestellt werden, beispielsweise ein Kreis, eine Ecke etc.. Die durch die Überlagerung der Daten mehrerer Achsen entstehende Kontur wird der idealen Konturform gegenübergestellt. Dadurch kann beispielsweise ein Kreisformtest durchgeführt werden.

Es wird der Verlauf der Sollbahn, welcher anhand der in der numerischen Steuerung vorhandenen Daten eines Teileprogramms bekannt ist, mit der tatsächlich beschriebenen Istbahn verglichen, wobei letztere aus den am Lagemeßsystem mindestens zweier Achsen gemessenen Weginformationen abgeleitet wird. Um eine mögliche Konturabweichung darstellen zu können, ist jedoch nicht der zeitliche Bezug zwischen der Sollbahn und der tatsächlich beschriebenen Istbahn, sondern der geometrische Bezug zwischen Soll- und Istbahn maßgebend. Aus diesem Grund wird ein Sollwertvektor ermittelt, der denselben Winkel aufweist wie der aktuelle Istwertvektor. Der Abstand der beiden Vektoren kann nun auf die Normale des Sollwertverlaufes abgebildet und vergrößert dargestellt werden und stellt ein Maß, eine Konturabweichung in dem betrachteten Bahnpunkt von Sollbahn bzw. Istbahn dar. Dadurch kann jede beliebige zweidimensionale oder mehrdimensionale Geometrie gemessen und maßstabsgetreu angezeigt werden. Anhand dieser auf die Normale des Sollwertverlaufs abgebildeten Bahn wird nun die Konturabweichung mit entsprechend hoher Auflösung dargestellt, wodurch man ein Bild erhält, das bereits von den Meßprotokollen der herkömmlicherweise durchgeführten Werkstückmessung bekannt ist.

Eine solche Vorgehensweise ist besonders dann hilfreich, wenn das Interpolationsverhalten zwischen einer Linearachse und einer Rundachse untersucht werden soll. Einen solchen Anwendungsfall stellt beispielsweise das Nockenwellenschleifen dar. In solchen Fällen kann ein Kreisformtest nicht angewendet werden, da bei diesen ein sinusförmiger oder cosinusförmiger Sollwertverlauf vorausgesetzt wird.

Die Konturdarstellung bzw. eine ermittelte Konturabweichung kann ebenfalls zur Optimierung eines Teileprogrammes verwendet werden, um an kritischen Übergängen den maximal zulässigen Konturfehler einzuhalten. Wird festgesellt, daß die tatsächliche Konturabweichung die maximal zulässige Konturabweichung überschreitet, so werden Teileprogrammparameter entsprechend so angepaßt, daß die tatsächlich auftretende Konturabweichung im maximal zulässigen Bereich bleibt. Solche Teileprogrammparameter können beispielsweise eine Überprüfung der maximal möglichen Geschwindigkeit, ein Fahren mit oder ohne Drehzahlvorsteuerung oder ein Fahren mit oder ohne Ruckbegrenzung etc. sein.

Besonders vorteilhaft ist es, wenn die die Weginformationen repräsentierenden Daten als Schleppabstandswerte mit Hilfe des Lagemeßsystemes gemessen werden. Aus der bekannten Sollbahn und dem gemessenen Schleppabstand läßt sich dann die tatsächlich Istbahn mit entsprechend hoher Auflösung berechnen. Für den Fall, daß mindestens eine Achse als Rundachse betrieben wird und ebenfalls eine Linearachse vorgesehen ist, so müssen die Sollbahn- und Istbahnwerte, die nun in Polarkoordinatendarstellung vorliegt, in das kartesische Koordinatensystem umgewandelt werden. Dazu wird die Radiusinformation aus den Werten der Linearachse und die Winkelinformation aus den Werten der Rundachse gewonnen. Ausgehend davon können dann die Daten für die Konturdarstellung aufbereitet werden. Zu diesem Verarbeitungszeitpunkt stehen die Meßwerte lediglich in einem zeitlichen Bezug zueinander. Für die Ermittelung einer Konturabweichung ist jedoch nur der geometrische Bezug maßgebend.

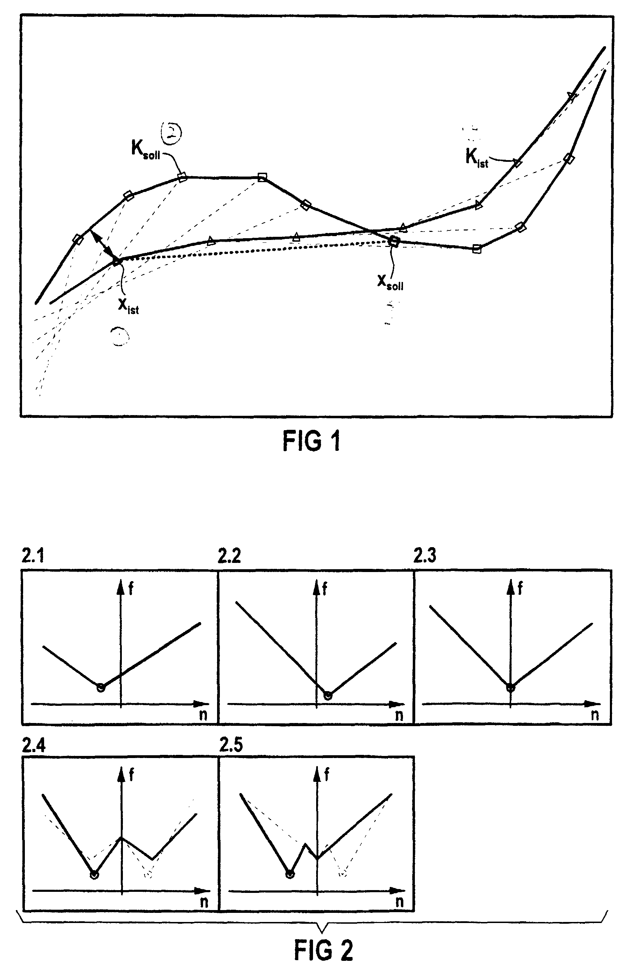

In der Darstellung gemäß FIG 1 ist ein Konturzug zur Verdeutlichung der Problematik zwischen zeitlichem und geometrischem Bezug zwischen der Sollbahn $K_{soll}$ und der Istbahn $K_{ist}$ gezeigt. Die einzelnen Stützpunkte der Sollbahn $K_{soll}$ sind mit Quadraten markiert, die Stützpunkte der Istbahn $K_{ist}$ entsprechend mit Dreiecken. Aus dem Verlauf der beiden genannten Konturbahnen ist ersichtlich, daß der zu einem beliebigen Sollbahnpunkt $x_{soll}$ zugehörige Istbahnpunkt $x_{ist}$ dem entsprechenden Sollbahnwert nacheilt. Es kann jedoch nicht immer davon ausgegangen werden, daß der Sollbahnwert $x_{soll}$ wie in dem gemäß der Darstellung nach FIG 1 gezeigten Beispiel dem Istbahnwert $x_{ist}$ vorauseilt. Daher sind unterschiedliche Konstellationen zur Ermittlung des geometrischen Bezuges zwischen Sollbahn und tatsächlicher Istbahn abhängig von möglichen bekannten Schleppabstandsverläufen notwendig.

In der Darstellung gemäß FIG 2 sind die häufigsten Konstellationen für eine möglichst effektive Bestimmung des zu einem Istwert $x_{ist}$ zugehörigen Sollwertes $x_{soll}$ dargestellt. Dabei ist auf der mit f bezeichneten Ordinate in den Darstellungen 2.1 bis 2.5 jeweils die Wegdifferenz zwischen aktuellem Istwert $x_{ist}(x)$ zum jeweiligen Sollwert $x_{soll}(x \pm n)$

aufgetragen. Der Wert n, mit welchem die Abszisse bezeichnet ist, beschreibt, ob es sich bei dem betrachteten Sollwert um einen dem entsprechenden Istwert vorangehenden Sollwert handelt (negativer Wert von n) oder aber um einen auf den betrachteten Istwert folgenden Sollwert (positiver Wert für n). Die Wegdifferenz f wird dabei entsprechend der folgenden Berechnungsvorschrift bestimmt, welche beispielhaft für eine mittels zweier Achsen beschriebenen Kontur dargestellt wird:

$$f(x) = \sqrt{\left\{ \begin{array}{l} \left[\text{Istwert\_Achse\_1}(x) - \text{Sollwert\_Achse\_1}(x+n)\right]^2 \\ + \left[\text{Istwert\_Achse\_2}(x) - \text{Sollwert\_Achse\_2}(x+n)\right]^2 \end{array} \right\}}$$

Bestimmt wird dabei jeweils das Minimum der ermittelten Wegdifferenzwerte f, wozu möglichst jedem Istwert $x_{ist}(x)$ der nächstgelegene Sollwert $x_{soll}(x+n)$ zugeordnet wird. Die Darstellung 2.1 zeigt einen Sollwert, welcher dem Istwert vorangeht. Die Darstellung 2.2 den umgekehrten Fall, in dem der Istwert dem Sollwert vorauseilt. In der Darstellung 2.3 fallen Sollwert und Istwert zusammen. In den Darstellungen 2.4 und 2.5 ergibt sich für die jeweils ermittelte Wegdifferenz ein komplexerer Verlauf, von dem jeweils das Minimum als der dem zu betrachtenden Istwert nächstkommende Sollwert ermittelt wird. Das in den Darstellungen 2.1 bis 2.5 gezeigte Minimum ist jeweils mit einem Kreis gekennzeichnet.

Eine Ermittlung einer Konturabweichung setzt jedoch wie der Kreisformtest voraus, daß die tatsächliche Konturabweichung normal zur Sollbahn berechnet und aufgetragen wird. Dies ist dann der Fall, wenn die Konturabweichung im Winkel von 90° zur Sollbahn ermittelt wird. Um auch dabei Fehler zu minimieren, muß ermittelt werden, welcher Sollwert $x_{soll}(x+n\pm1)$ dem Istwert $x_{ist}(x)$ am nächsten liegt. Dies geschieht anhand der bereits im vorangehenden dargestellten Vorgehensweise.

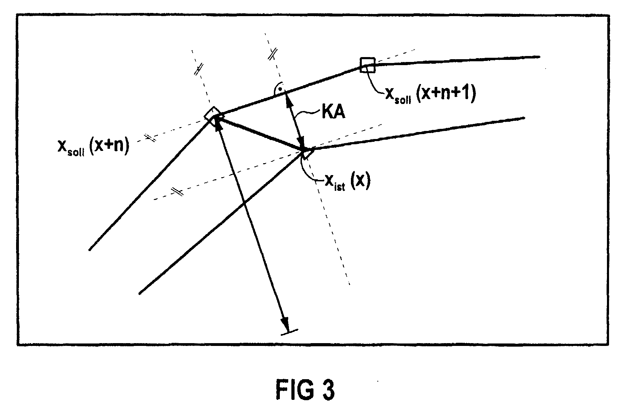

In der Darstellung gemäß FIG 3 ist die Vorgehensweise zur Ermittlung dieser echten Konturabweichung aus drei Punkten in der Ebene veranschaulicht. Gezeigt ist ein vergrößerter Ausschnitt aus der Darstellung eines Konturzuges gemäß der Darstellung nach FIG 1. Gezeigt ist zum einen der aktuell betrachtete Istwert $x_{ist}(x)$ sowie der diesem Istbahnpunkt mit geringstem Abstand vorangehende Sollwert $x_{soll}(x+n)$ sowie der dem Istbahnpunkt mit geringstem Abstand folgende Sollbahnpunkt $x_{soll}(x+n+1)$. Mit diesen drei Punkten im Raum wird nun eine Konturabweichung ermittelt, angezeigt und ausgewertet. Die so ermittelte echte Konturabweichung, welche einen Winkel von 90° zur Sollbahnkurve aufweist, ist in der Darstellung gemäß FIG 3 mit KA gekennzeichnet.

Über eine entsprechende Justierung von Kompensationsparametern, die den Ursachen für die fehlende Konturtreue entgegenwirken, werden Abweichungen minimiert. Die Kompensationsparameter können wiederum in Form einer Haftreibungskompensation, einer Momentvorsteuerung oder beispielsweise auch einer Drehzahlvorsteuerung vorgenommen werden. Denkbar sind jedoch auch andere Kompensationsmaßnahmen, abhängig von der in der zugrundliegenden numerischen Steuerung zur Verfügung gestellten Funktionalität.

Durch den erfindungsgemäßen Einsatz vorhandener Lagemeßsysteme zur Bestimmung und Optimierung der Arbeitsgenauigkeit ergeben sich somit folgende weitere Vorteile. Eine Messung der Lage hat zur Folge, daß kein fehlerbehaftetes Umrechnen von Beschleunigungsmomenten bzw. Drehzahlwerten in Lageabweichungen notwendig ist. Die bestimmten Ungenauigkeiten können somit sehr exakt bestimmt werden. Zusätzlich ist kein Justieren von Meßaufnehmern wie Meßtastern oder Linealen oder für den Kreisformtest von Kreisnormalen mit zweidimensionalem Tastkopf notwendig. Eine Messung kann innerhalb weniger Minuten vollzogen werden, wodurch sich Entwicklungszeiten und Inbetriebnahmezeiten reduzieren. Hinzu kommt, daß der Ablauf einer Messung im Rahmen einer Bedienoberfläche einer numerischen Steuerung menügeführt erfolgen kann, indem er in die Menüsteuerung eingebunden wird. Auf diese Art und Weise läßt sich erreichen, daß eine Anzeige der Meßergebnisse direkt am Bildschirm der numerischen Steuerung oder eines Programmiergerätes erfolgt, wodurch sich für das die Messungen durchführende Personal weitere Veranschaulichungsmöglichkeiten und somit weitere Rückschlüsse auf mögliche Ursachen für Ungenauigkeiten ergeben.

**Patentansprüche**

1.    Verfahren zur Bestimmung und Optimierung der Arbeitsgenauigkeit einer Werkzeugmaschine oder eines Roboters oder dergleichen unter Verwendung vorhandener Lagemeßsysteme, wobei in einer numerischen Steuerung durch eine Lagemessung Weginformationen beliebig vieler Achsen über ein vorgebbares Meßintervall abgetastet und gespeichert werden, die so gewonnenen Daten derart umgeformt und aufbereitet werden, daß Rückschlüsse auf die tatsächliche Arbeitsgenauigkeit und auf Ursachen für Ungenauigkeiten möglich sind, und auf die Ursachen einwirkende Kompensationsparameter so bemessen werden, daß sie den Ursachen für Ungenauigkeiten entgegenwirken, indem zur Bestimmung und Optimierung der Konturtreue die Weginformationen repräsentierenden Daten nach folgenden Verfahrensschritten umgeformt und aufbereitet werden:

1.1 aus den die Weginformationen repräsentierenden Daten wird entsprechend der zugrundeliegenden Kontur eine tatsächlich beschriebene Istbahn ($K_{ist}$) der vorgesehenen Achsen ermittelt und mit dem Verlauf einer zugehörigen Sollbahn ($K_{soll}$) verglichen,

1.2 zwischen der Istbahn ($K_{ist}$) und der Sollbahn ($K_{soll}$) wird ein geometrischer Bezug hergestellt, indem ein Sollwertvektor ermittelt wird, welcher denselben Winkel aufweist wie der aktuelle Istwertvektor,

1.3 eine Konturabweichung (KA) in einem beliebigen Bahnpunkt wird als der Abstand zwischen dem Istwertvektor und dem Sollwertvektor in dem genannten Bahnpunkt ermittelt,

1.4 Konturabweichungen von der Sollbahn ($K_{soll}$) werden durch eine entsprechende Justierung von Kompensationsparametern wie Haftreibungskompensation und/oder Momentvorsteuerung und/oder Drehzahlvorsteuerung minimiert.

2. Verfahren zur Bestimmung und Optimierung der Arbeitsgenauigkeit einer Werkzeugmaschine oder eines Roboters oder dergleichen nach Anspruch 2, wobei die Weginformationen repräsentierenden Daten als Schleppabstandswerte gemessen werden und die tatsächlich beschriebene Istbahn ($K_{ist}$) der vorgesehenen Achsen anhand dieser Schleppabstandswerte und den Sollbahnwerten ($K_{soll}$) ermittelt wird.

3. Verfahren zur Bestimmung und Optimierung der Arbeitsgenauigkeit einer Werkzeugmaschine oder eines Roboters oder dergleichen nach Anspruch 1 oder 2, wobei mindestens eine der vorgesehenen Achsen als Rundachse und mindestens eine andere Achse als Linearachse ausgelegt ist und die zur Rundachse zugehörigen, in Polarkoordinaten vorliegenden Sollbahnwerte und Istbahnwerte in das karthesische Koordinatensystem umgewandelt werden, indem die Radiusinformation aus den Werten der Linearachse und die Winkelinformation aus den Werten der Rundachse gewonnen werden.

4. Verfahren zur Bestimmung und Optimierung der Arbeitsgenauigkeit einer Werkzeugmaschine oder eines Roboters oder dergleichen nach Anspruch 1, 2 oder 3, wobei als Konturabweichung die echte Konturabweichung (KA) im Winkel von 90 Grad zur Sollbahn ($K_{soll}$) anhand des Istbahnpunktes ($x_{ist}(x)$) und den beiden jeweils dem Istbahnpunkt ($x_{ist}(x)$) mit geringstem Abstand vorangehenden ($x_{soll}(x+n)$) und mit geringstem Abstand folgenden ($x_{soll}(x+n+1)$) Sollbahnpunkten ermittelt wird.

5. Verfahren zur Bestimmung und Optimierung der Arbeitsgenauigkeit einer Werkzeugmaschine oder eines Roboters oder dergleichen nach einem der vorstehenden Ansprüche, wobei eine Anzeige der Meßergebnisse bzw. Daten direkt am Bildschirm einer vorhandenen numerischen Steuerung erfolgt.

6. Verfahren zur Bestimmung und Optimierung der Arbeitsgenauigkeit einer Werkzeugmaschine oder eines Roboters oder dergleichen nach einem der vorstehenden Ansprüche, wobei durch eine Justierung von Teileprogrammparametern entsprechend einer vorab ermittelten Konturabweichung eine Optimierung dieses Teilprogrammes so vorgenommen wird, daß eine maximal zulässige Konturabweichung in jedem Punkt der zu beschreibenden Kontur gewährleistet wird.

7. Verfahren zur Bestimmung und Optimierung der Arbeitsgenauigkeit einer Werkzeugmaschine oder eines Roboters oder dergleichen nach einem der vorstehenden Ansprüche, wobei zur Bestimmung und Optimierung des Gleichlaufes die Weginformationen repräsentierenden Daten nach folgenden Verfahrensschritten umgeformt und aufbereitet werden:

7.1 für jede Achse wird die Steigung der Wegänderung über die Zeit ermittelt,

7.2 für jede Achse wird anschließend mit Hilfe einer Fehlerquadratminimierung eine eventuelle Wegabweichung über die Zeit ermittelt,

7.3 über eine Spektralanalyse der Wegabweichungswerte, insbesondere durch eine Fourieranalyse, werden die Ursachen ermittelt und getrennt.

8. Verfahren zur Bestimmung und Optimierung der Arbeitsgenauigkeit einer Werkzeugmaschine oder eines Roboters oder dergleichen nach einem der vorstehenden Ansprüche, wobei zur Bestimmung und Optimierung der Positioniergenauigkeit die Weginformationen repräsentierenden Daten nach folgenden Verfahrensschritten umgeformt und aufbereitet werden:

8.1  die ermittelten Lagewerte werden in ihrem zeitlichen Verlauf exakt da, wo eine Regelung eingreift, den Lagesollwerten gegenübergestellt,

8.2  eine eventuelle Abweichung wird durch eine entsprechende Justierung von Kompensationsparametern wie Haftreibungskompensation und/oder Momentvorsteuerung und/oder Drehzahlvorsteuerung minimiert.

## Claims

1. Method of determining and optimizing the operating accuracy of a machine tool, a robot or the like, using existing position-measuring systems, position information of an optional number of axes being sampled over a predefinable measuring interval in a numerical control system by means of a position measurement and being stored, the data thus obtained being transformed and conditioned in such a way that it is possible to draw conclusions about the operating accuracy achieved in reality and about the causes of inaccuracies, and compensation parameters that act on the causes being calculated such that they counteract and compensation parameters that act on the causes being specified such that they counteract the causes of inaccuracies, in that, for determining and optimizing the truth of the contour, the data representing position information are transformed and conditioned in accordance with the following method steps:

   1.1  from the data representing the position information, in accordance with the fundamental contour, an actual path ($K_{actual}$) of the axes provided that is described in reality is ascertained and compared with the course of an associated nominal path ($K_{nominal}$),

   1.2  a geometrical relationship between the actual path ($K_{actual}$) and the nominal path ($K_{nominal}$) is produced by ascertaining a nominal value vector which has the same angle as the current actual value vector,

   1.3  a contour deviation (KA) at any point on the path is ascertained as the distance between the actual value vector and the nominal value vector at said point on the path,

   1.4  contour deviations from the nominal path ($K_{nominal}$) are minimized by means of an appropriate adjustment of compensation parameters, such as stiction compensation and/or torque precontrol and/or speed precontrol.

2. Method of determining and optimizing the operating accuracy of a machine tool, a robot or the like according to Claim 1, the data representing the position information being measured as following-error values, and the actual path ($K_{actual}$) of the axes provided that is described in reality being ascertained using these following-error values and the nominal path values ($K_{nominal}$).

3. Method of determining and optimizing the operating accuracy of a machine tool, a robot or the like, according to Claim 1 or 2, at least one of the axes provided being designed as a circular axis and at least one other axis as a linear axis, and the nominal path values and actual path values that belong to the circular axis and are present in polar coordinates being converted into the cartesian coordinate system, in that the radius information is obtained from the values of the linear axis and the angle information is obtained from the values of the circular axis.

4. Method of determining and optimizing the operating accuracy of a machine tool, a robot or the like, according to Claim 1, 2 or 3, the contour deviation ascertained being the true contour deviation (KA) at an angle of 90 degrees to the nominal path ($K_{nominal}$), using the point on the actual path ($x_{actual}(x)$) and the two points on the nominal path which respectively precede the point on the actual path ($x_{actual}(x)$) at the smallest distance ($x_{nominal}(x+n)$) and follow the point on the actual path ($x_{actual}(x)$) at the smallest distance ($x_{nominal}(x+n+1)$).

5. Method of determining and optimizing the operating accuracy of a machine tool, a robot or the like, according to one of the preceding claims, the measurement results or data being indicated directly on the monitor of an existing numerical control system.

6. Method of determining and optimizing the operating accuracy of a machine tool, a robot or the like, according to one of the preceding claims, it being the case that, by adjusting subprogram parameters in accordance with a previously ascertained contour deviation, this subprogram is optimized in such a way that a maximum permissible contour deviation is ensured at every point on the contour to be described.

7. Method of determining and optimizing the operating accuracy of a machine tool, a robot or the like, according to one of the preceding claims, it being the case that, for determining and optimizing the synchronism, the data representing the position information are transformed and conditioned in accordance with the following method steps:

7.1 for each axis, the slope of the position change over time is ascertained,

7.2 for each axis, any possible position deviation over time is then ascertained by minimizing the error squares,

7.3 via a spectral analysis of the position deviation values, in particular by means of a Fourier analysis, the causes are ascertained and separated.

**8.** Method of determining and optimizing the operating accuracy of a machine tool, a robot or the like according to one of the preceding claims, it being the case that, for determining and optimizing the positioning accuracy, the data representing the position information is transformed and conditioned in accordance with the following method steps:

8.1 the position values ascertained are compared with the nominal position values, in terms of their course over time, exactly at the point where a control system acts,

8.2 any possible deviation is minimized by means of an appropriate adjustment of compensation parameters, such as stiction compensation and/or torque precontrol and/or speed precontrol.

**Revendications**

**1.** Procédé pour la détermination et l'optimisation de la précision de travail d'une machine-outil ou d'un robot ou similaire en utilisant des systèmes de mesure de position existants, dans lequel on analyse et on mémorise dans une commande numérique par une mesure de position des informations de déplacement d'un nombre quelconque d'axes sur un intervalle de mesure prescriptible, on transforme et on prépare les données ainsi obtenues de manière à permettre des déductions sur la précision de travail effective et sur des causes d'imprécisions, et on dimensionne des paramètres de compensation agissant sur les causes de telle sorte qu'ils agissent à l'encontre des causes d'imprécisions, les données représentant les informations de déplacement étant transformées et préparées pour la détermination et l'optimisation de la précision de contour selon les étapes de procédé suivantes :

1.1 on détermine à partir des données représentant les informations de déplacement, en fonction du contour de base, une trajectoire réelle ($K_{ist}$) effectivement décrite des axes prévus et on la compare à l'allure d'une trajectoire de consigne ($K_{soll}$) associée,

1.2 on établit entre la trajectoire réelle ($K_{ist}$) et la trajectoire de consigne ($K_{soll}$) une relation géométrique en déterminant un vecteur de valeur de consigne qui présente le même angle que le vecteur de valeur réelle actuel,

1.3 on détermine un écart de contour (KA) en un point de trajectoire quelconque comme étant la distance entre le vecteur de valeur réelle et le vecteur de valeur de consigne au point de trajectoire mentionné,

1.4 on minimise des écarts de contour par rapport à la trajectoire de consigne ($K_{soll}$) au moyen d'un ajustage correspondant de paramètres de compensation comme la compensation de frottement par adhérence et/ou la commande pilote de couple et/ou la commande pilote de vitesse de rotation.

**2.** Procédé pour la détermination et l'optimisation de la précision de travail d'une machine-outil ou d'un robot ou similaire selon la revendication 1, dans lequel les données représentant des informations de déplacement sont mesurées sous forme de valeurs d'écart de poursuite et dans lequel la trajectoire réelle ($K_{ist}$) effectivement décrite des axes prévus est déterminée à l'aide de ces valeurs d'écart de poursuite et des valeurs de trajectoire de consigne ($K_{soll}$).

**3.** Procédé pour la détermination et l'optimisation de la précision de travail d'une machine-outil ou d'un robot ou similaire selon la revendication 1 ou 2, dans lequel au moins l'un des axes prévus est conçu comme un axe circulaire et au moins un autre axe est conçu comme un axe linéaire et dans lequel on transpose dans le système de coordonnées cartésiennes les valeurs de trajectoire de consigne associées à l'axe circulaire et présentes en coordonnées polaires en obtenant l'information de rayon à partir des valeurs de l'axe linéaire et l'information d'angle à partir des valeurs de l'axe circulaire.

**4.** Procédé pour la détermination et l'optimisation de la précision de travail d'une machine-outil ou d'un robot ou similaire selon la revendication 1, 2 ou 3, dans lequel on détermine comme écart de contour l'écart de contour réel (KA) selon l'angle de 90° par rapport à la trajectoire de consigne ($K_{soll}$) à l'aide du point de trajectoire réelle ($x_{ist}(x)$) et à l'aide des deux points de trajectoire de consigne ($x_{soll}(x+n)$) précédant le point de trajectoire réelle

$(x_{ist}(x))$ à la plus petite distance et $(x_{soll}(x+n+1))$ suivant le point de trajectoire réelle $(x_{ist}(x))$ à la plus petite distance.

**5.** Procédé pour la détermination et l'optimisation de la précision de travail d'une machine-outil ou d'un robot ou similaire selon l'une des revendications précédentes, dans lequel on effectue un affichage des résultats de mesure, c'est-à-dire des données, directement sur l'écran d'une commande numérique existante.

**6.** Procédé pour la détermination et l'optimisation de la précision de travail d'une machine-outil ou d'un robot ou similaire selon l'une des revendications précédentes, dans lequel on effectue au moyen d'un ajustage de paramètres de programme de pièce, en fonction d'un écart de contour déterminé au préalable, une optimisation de ce programme de pièce de manière à garantir un écart de contour maximal autorisé en chaque point du contour à décrire.

**7.** Procédé pour la détermination et l'optimisation de la précision de travail d'une machine-outil ou d'un robot ou similaire selon l'une des revendications précédentes, dans lequel, pour la détermination et l'optimisation du synchronisme, on transforme et on prépare les données représentant des informations de déplacement selon les étapes du procédé suivantes :

    7.1    on détermine pour chaque axe la pente de la variation de déplacement en fonction du temps,

    7.2    on détermine ensuite pour chaque axe à l'aide d'une minimisation des carrés d'erreurs un écart de déplacement éventuel en fonction du temps,

    7.3    par l'intermédiaire d'une analyse spectrale des valeurs d'écart de déplacement, notamment au moyen d'une analyse de Fourier, on détermine et on distingue les causes.

**8.** Procédé pour la détermination et l'optimisation de la précision de travail d'une machine-outil ou d'un robot ou similaire selon l'une des revendications précédentes, dans lequel, pour la détermination et l'optimisation de la précision de positionnement, on transforme et on prépare les données représentant des informations de déplacement selon les étapes du procédé suivantes :

    8.1    on confronte, quant à leur allure temporelle, les valeurs de position déterminées aux valeurs de position de consigne exactement là où intervient une régulation,

    8.2    on minimise un éventuel écart au moyen d'un ajustage correspondant de paramètres de compensation comme la compensation de frottement par adhérence et/ou la commande pilote de couple et/ou la commande pilote de vitesse de rotation.

FIG 1

FIG 2

FIG 3